# EUROPÄISCHE PATENTSCHRIFT

(11) **EP 0 429 499 B1**
(45) Veröffentlichungstag und Bekanntmachung des Hinweises auf die Patenterteilung: **14.07.1993**
(21) Anmeldenummer: 89909121.9
(22) Anmeldetag: 04.08.1989
(51) Int. Cl.: F25D 16/00, A23L 3/34

(54) **KÜHLVERFAHREN UND KÜHLBEHÄLTER**
REFRIGERATING PROCESS AND REFRIGERATING CONTAINER
PROCEDE ET CONTENEUR DE REFROIDISSEMENT

(30) Priorität: 04.08.1988 AT 1968/88
(43) Veröffentlichungstag der Anmeldung: 05.06.1991
(73) Patentinhaber: Franz Welz Internationale Transporte GmbH, A-5021 Salzburg (AT)
(72) Erfinder: WASSIBAUER, Rüdiger, (AT); RUSS, Werner, A-5541 Altenmarkt (AT)
(74) Vertreter: Brauneiss, Leo, Dipl.Ing.
(86) Internationale Anmeldenummer: AT8900070
(87) Internationale Veröffentlichungsnummer: WO9001661

(56) Entgegenhaltungen:
- EP-A- 0 126 996
- EP-A- 0 136 042
- EP-A- 0 224 469
- EP-A- 0 235 119
- DE-A- 1 601 874
- DE-A- 1 954 914
- FR-A- 2 330 608
- US-A- 3 239 360
- US-A- 3 487 769

## Beschreibung

Die Erfindung betrifft einen Kühlbehälter gemäß dem Oberbegriff des Patentanspruches 1. Ferner betrifft die Erfindung ein Kühlverfahren für Kühlbehälter gemäß dem Oberbegriff des Patentanspruches 20.

Eine Anordnung der genannten Art ist z.B. aus der AU-PS 27731/67 bekannt. Diese bekannte Anordnung zeigt jedoch keine ausreichenden Vorkehrungen zur energie- und gassparenden bzw. warenschonenden Kühlung. Kühlbehälter der eingangs genannten Gattung sind z.B. auch in der US-PS 3 487 769 sowie in der EP-A 224 469 beschrieben. Diese spezielle Art von Kühlbehältern sieht vor, daß in flüssiger Form vorliegender Stickstoff in Behältern mit dem Kühlcontainer mitgeführt wird und dieser Stickstoff als Kühlmittel in den Kühlraum eingespritzt wird, um eine Absenkung der Temperatur des Kühlraumes zu erreichen. Zusätzlich zum Einspritzen von flüssigem Stickstoff ist noch ein Kühlaggregat vorgesehen, mit dem die Atmosphäre im Inneren des Kühlcontainers auf einem gewissen Niveau gehalten wird bzw. abgekühlt werden kann. Der Gattungsbegriff der vorliegenden Erfindung setzt somit sowohl ein Kühlaggregat zur Kälteerzeugung als auch einen Behälter mit flüssigem Stickstoff zwingend voraus.

Ziel der Erfindung ist es, bei derartigen Kühlbehältern zu erreichen, daß eine möglichst gleichmäßige Atmosphärenzusammensetzung bei möglichst gleichmäßiger Temperatur über einen möglichst langen Zeitraum aufrechterhalten werden kann; insbesondere soll die Lagerzeit bei erhöhter Qualität der im Kühlbehälter gelagerten Waren verlängert werden. Derartige Kühlbehälter sind insbesondere dafür gedacht, als Aufbauten auf LKWs oder Eisenbahnwaggons ausgebildet zu werden, oder auf Schiffe verladen und damit transportiert werden zu können. Derartige Kühlbehälter dienen insbesondere zum Transport von Lebensmitteln, Blumen, Fleisch, Gemüse, Obst, aber auch für Chemikalien, Pharmazeutika und anderen Waren, welche eine bestimmte Atmosphärenzusammensetzung und/oder Temperatur für den Transport benötigen.

Ein Kühlbehälter der eingangs genannten Art ist erfindungsgemäß durch die im Kennzeichen des Patentanspruches 1 angeführten Merkmale gekennzeichnet. Ein Verfahren der eingangs genannten Art ist erfindungsgemäß durch die im Kennzeichen des Patentanspruches 20 angeführten Merkmale gekennzeichnet.

Das Gebläse für die im Inneren des Behälters erfolgende Umwälzung der Atmosphäre ist ein im Normalfall abgeschaltetes Gebläse, das von der Steuereinrichtung in willkürlich bestimmten oder von bestimmten Parameterwerten im bzw. außerhalb des Behälters, insbesondere der Temperatur und/oder der Feuchtigkeit (relative Luftfeuchte), abhängigen Zeitabständen für eine vorbestimmte oder von den Parameterwerten abhängige Laufzeitdauer einschaltbar ist. Bei einem derartigen Kühlbehälter ist es neu, ein Gebläse vorzusehen, mit dem die Atmosphäre im Kühlbehälter unter Steuerung einer Steuereinrichtung für vorgegebene Zeitabschnitte umgewälzt wird. Es ist zutreffend, daß eine Umwälzung der Atmosphäre aus der EP-A 224 469 bekannt ist; bei einem Kühlbehälter gemäß der eingangs angeführten Gattung ist eine derartige Umwälzung jedoch neu.

Die Erfindung unterscheidet sich prinzipiell von dem gängigen Stand der Technik, demzufolge Behälter mit flüssigem Stickstoff mitgeführt werden, denen der flüssige Stickstoff entnommen und direkt in die Kühlbehälter eingespritzt wird. Keinesfalls ist dem Stand der Technik zu entnehmen, daß eingespeiste Gase, sofern diese kälter als die Atmosphäre im Kühlbehälter sind, aufgewärmt werden sollen. Dies wäre unter Berücksichtigung des Standes der Technik für den Fachmann direkt widersinnig, da dieser bislang gewohnt war, die Kühlenergie des mitgeführten flüssigen Stickstoffes bestmöglich auszunützen, indem die Verdampfungswärme des Stickstoffs für Kühlzwecke herangezogen wurde bzw. der Stickstoff mit möglichst tiefen, gerade nicht mehr warenschädlichen Temperaturen in den Kühlraum einzubringen; die Leistung des Kühlaggregates konnte dadurch niedrig gehalten werden. Die Erfindung geht gerade den umgekehrten Weg, nämlich, die Leistung des Kühlaggregates wird unberücksichtigt gelassen und vielmehr auf eine qualitativ hochstehende Kühlung der eingelagerten Waren Wert gelegt, nämlich derart, daß der mitgeführte flüssige Stickstoff nahezu ausschließlich zur Einstellung der Atmosphäre verwendet wird, und deshalb sogar unter Energieverbrauch bzw. Kühlenergieverlust erwärmt und mit einer Temperatur in den Kühlbehälter eingespeist wird, welche bei oder gerade unter der vorhandenen Kühltemperatur liegt, während die Kühlleistung vom Kühlaggregat aufgebracht wird. Der zugeführte Stickstoff soll die Temperatur möglichst nicht ändern.

Mit der erfindungsgemäßen Anordnung bzw. dem erfindungsgemäßen Verfahren wird erreicht, daß der zur Einstellung der Atmosphärenzusammensetzung zugeführte Stickstoff mit einer Temperatur (°K) in den Kühlraum eingespeist werden kann, die im wesentlichen der Temperatur (°K) entspricht, die im Kühlraum herrscht bzw. bis zu etwa 5% geringer ist. Es wird dadurch vermieden, daß durch die Einspeisung des Stickstoffs mit einer zu tiefen Temperatur Ware infolge Kühlschäden zerstört wird. Das Mitführen des Stickstoffs in flüssiger Form in Behältern wird deshalb gewählt, da diese Form der Stickstoffmitführung einen möglichst großen Stickstoffvorrat gewährleistet, verglichen mit einer Speicherung des mitgeführten Stickstoffs in Druckflaschen. Die zur Kühlung benötigte Energie wird von einem z.B. mit Benzin, Dieselöl od. dgl. betriebenen Kühlaggregat geliefert, welches die Atmosphäre des Behälters kühlt, indem diese über das Kühlaggregat umgewälzt wird.

Besonders vorteilhaft und energiesparend ist es, wenn die Einrichtung zur Erwärmung des Stickstoffs zumindest einen außerhalb des Kühlbehälters angeordneten Wärmetauscher umfaßt, der in Wärmekontakt mit der Umgebungsluft steht bzw. von dieser umströmt ist und/oder zumindest einen Wärmetauscher umfaßt, der in der Kältemittelleitung zwischen dem Kompressor und dem Kondensator des Kühlaggregates angeordnet ist oder der mit dem Kältemittelkondensator in Wärmekontakt steht. Damit wird die Energiebilanz des Kühlbehälters verbessert, da Einrichtungen zur Erwärmung des Stickstoffs, z.B. elektrische Heizeinrichtungen, entfallen können; die benötigte Energie zur Erwärmung des Stickstoffs liefert das Kühlaggregat oder die Außenluft. Schließlich werden wesentliche Stickstoffverluste vermieden, indem die Ausblaseleitung der Behälter für den flüssigen Stickstoff in das Innere des Kühlraumes geführt ist. Die üblicherweise an die Umgebung abgegebene Stickstoffmenge wird somit genutzt, wodurch sich eine verlängerte, von Nachfüllstationen für Stickstoff unabhängige Lagerzeit ergibt.

Die folgende Beschreibung, die Zeichnung und die Unteransprüche enthalten vorteilhafte Ausführungsformen der Erfindung.

Im folgenden wird die Erfindung an Hand der Zeichnung beispielsweise näher erläutert.

Es zeigen Fig.1 und 2 schematische Prinzipdarstellungen (teilweise im Vertikalschnitt) eines erfindungsgemäßen Kühlbehälters, Fig.3 bis 7 verschiedene schematische Ausführungsformen von Wärmetauscheranordnungen, Fig.8 und 9 zwei Ausführungsformen von Wärmetauschern und Fig.10 eine schematische Schnittansicht von oben.

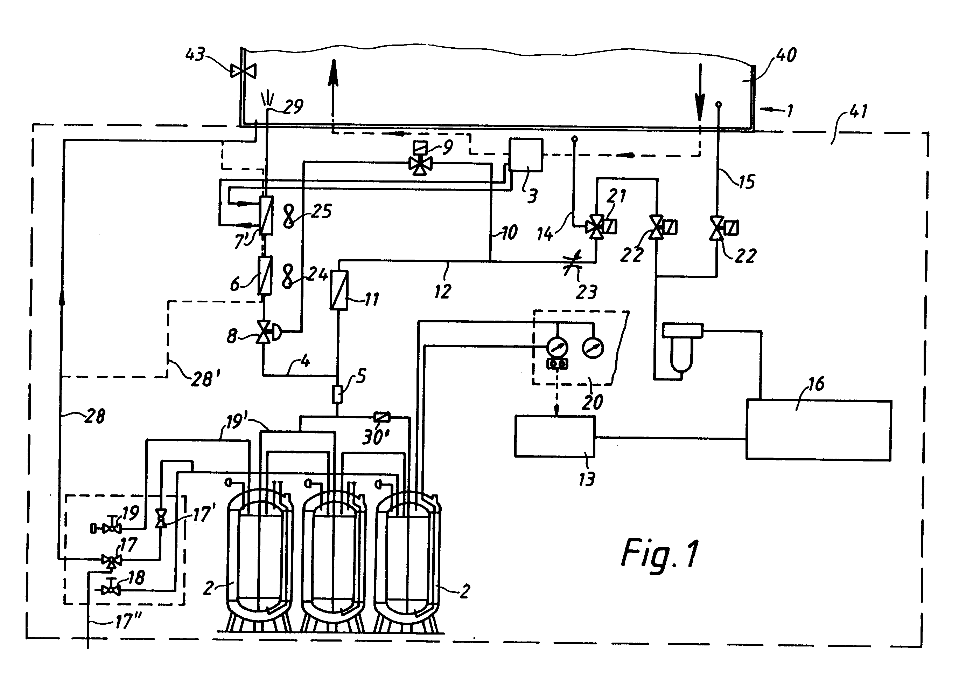

Fig.1 zeigt schematisch einen Kühlbehälter 1, mit einem Geräteraum 41 und einem Kühlraum 40, in den über eine Leitung 4 Stickstoff aus Behältern 2 eingespeist wird, in denen flüssiger Stickstoff enthalten ist. Der flüssige Stickstoff wird bei Lagerbeginn über ein Füllventil 19 und entsprechende Leitungen 19', die unter anderem eine Rückschlagklappe 30' enthalten, in die Behälter 2 eingefüllt. Mit 18 ist ein Lüftungsventil bezeichnet und mit 17 ein Dreiwegemagnetventil, dem ein Überdrucksicherheitsventil 17' vorgeschaltet ist.

Fig.10 zeigt schematisch, daß an den Kühlraum 40 der Geräteraum 41 anschließt bzw. angebaut ist. Im Geräteraum 41 sind die drei Behälter 2 für N₂ und ein Behälter 2' für CO₂ angeordnet. Getrennt in einer Abteilung ist das Kühlaggregat 3 samt Sensoren angeordnet, über das die Kühlraumatmosphäre umgewälzt wird. In einem oder mehreren weiteren Abteil(en) (Km) sind die Steuereinheit, der Kondensator des Kühlaggregats und weitere Baueinheiten angeordnet. In Fig.1 ist schematisch angedeutet, wie die Rückluft über das Kühlaggregat 3 geführt und als gekühlte Zuluft in den Kühlraum 40 eingespeist wird.

Die Aufrechterhaltung des Druckes der Zusammensetzung und dem Temperatur der Atmosphäre im Kühlraum 40 wird von einem Rechner 13 geregelt, der Meßinstrumente 20 bzw. eine Sensorbox 16 abfrägt und alle Ventile, Steuer- und Einstelleinrichtungen für die Behälterparameter steuert bzw. an alle Sensoren, z.B. Gas-, Druck- und Temperatursensoren im Inneren des Behälters, angeschlossen ist. Ferner überwacht der Rechner die Außentemperatur, die Standzeiten usw. und ist somit eingerichtet, den gesamten Kühlablauf von sich aus zu steuern, indem er Zugriff zu sämtlichen Regeleinheiten besitzt. Der zu Kalibrierzwecken der Sensorbox 16 bzw. der Meßeinrichtungen benötigte Stickstoff wird von den Behältern 2 über eine Leitung 12 abgezogen, die einen Wärmetauscher 11 besitzt, in der der Stickstoff durch Wärmekontakt mit der Umgebungsluft erwärmt wird. Der Stickstoff strömt in der Leitung 12 über eine Drossel 23 zu einem Dreiwegeventil 21, welches die Leitung 12 oder die Leitung 14, über welche Umgebungsluft ansaugbar ist, über ein Absperrventil 22 mit der Sensorbox 16 verbindet, welche ihrerseits über ein weiteres Absperrventil 22 über eine Leitung 15 mit der Atmosphäre im Kühlraum 40 verbindbar ist, so daß sie Vergleichsmessungen unter Verwendung von Stickstoff/Außenluft und Kühlraumatmosphäre durchführen kann.

Gleichzeitig dient die Leitung 12 bzw. der in ihr herrschende Druck zur Drucksteuerung eines pneumatischen Ventiles 9 über die Leitung 10, welches pneumatische Ventil 9 ein in der Leitung 4 gelegenes Tieftemperaturventil 8 öffnen, schließen und einregeln kann.

Die Leitung 4 ist in Fig.1 über einen Wärmetauscher 5 zum Wärmeaustausch mit der Umgebungsluft und einen Wärmetauscher 7' geführt, der im Kreislauf 32 des Kältemittels des Kühlaggregates 3 gelegen ist. Mit 32 sind die Kältemittelleitungen angedeutet, die vom Kompressor der Kälteeinrichtung 3 komprimiertes, d.h. warmes Kühlmittel, enthalten. Die Leitung 4 mündet in den Kühlraum 40 des Containers über eine Düse 29. Möglich wäre es auch, die Düse oder eine Drossel oder eine damit vergleichbare Einrichtung bereits außerhalb des Kühlraumes in der Leitung 4, allenfalls auch vor den Wärmetauschern 6 bzw.7', anzuordnen.

Über das Sicherheitsventil 17' und das Gasabblasventil 17, das über die Leitung 17'' mit der Außenluft in Verbindung steht, ist die Leitung 28 in den Kühlraum 40 des Behälters 1 geführt, mit der der stetig in den Behältern 2 verdampfende Stickstoff unter Regelung der Steuereinheit 13 in den Lagerraum 40 eingeleitet werden kann. Ist eine N₂-Einleitung in den Kühlraum nicht erforderlich, wird der N₂ an die Umgebung über 17'' abgegeben. Die Leitung 28 könnte auch, wie strichliert mit 29' angedeutet, über den Wärmetauscher 6 bzw. den Wärmetauscher 7' geführt sein, um dem durchgeleiteten Stickstoff eine höhere Temperatur zu erteilen. Mit 43 ist ein Überdruckventil für den Kühlraum 1 bezeichnet.

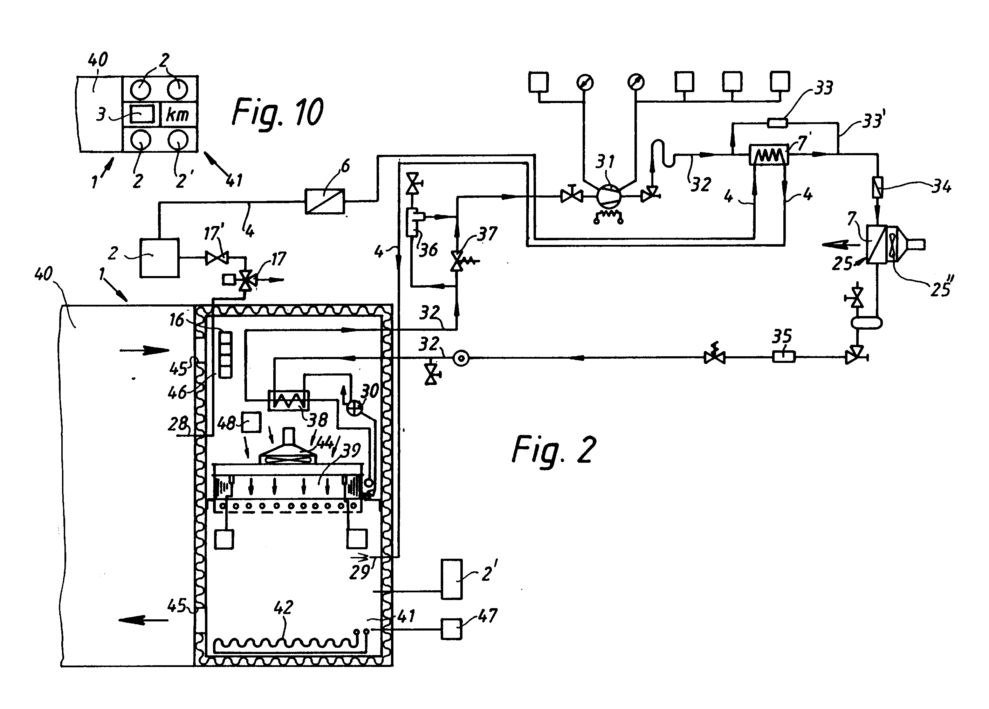

Fig.2 zeigt schematisch einen Container 1, der in den Kühlraum 40, der gegebenenfalls auch mit einer Heizung 42 (z.B. für eine rasche Erwärmung der Waren) versehen ist, und in einen Geräteraum 41, in dem sich (siehe auch Fig.10) das Kühlaggregat 3, die Stickstoffbehälter 2, der CO₂-Behälter 2; die Steuereinrichtung 13 und die weiteren technischen Einrichtungen befinden, unterteilt ist. Von den im Geräteraum 41 befindlichen Stickstoffbehältern 2 ist über die Ventile 17,17' die Leitung 28 für den naturgemäß in den Behältern 2 verdampfenden Stickstoff in den Kühlraum 40 und/oder Geräteraum 41 geführt. CO₂ wird in den Geräteraum 41 und/oder Kühlraum 40 eingeleitet, die Einleitung kann dabei vor oder nach dem Verdampfer 39 bzw. in den Zuluft- und/oder Rückluftstrom erfolgen. Über die Leitung 4, den Wärmetauscher 6, den Wärmetauscher 7' und über die Drossel bzw. Düse 29 wird Stickstoff mit einer Temperatur, welche im wesentlichen der Temperatur im Kühlraum 40 entspricht, in diesen eingespeist. Die Behälteratmosphäre wird über den Verdampfer 39 des Kühlaggregates 3 mittels eines Verdampfergebläses 44 umgewälzt und über angedeutete Kanäle 45 in den Kühlraum 40 gefördert bzw. von diesem abgezogen. Vorteilhafterweise erfolgt die Umwälzung der Atmosphäre über den Verdampfer 39 des Kühlaggregates 3 von oben nach unten bzw. im wesentlichen senkrecht.

In der Leitung 32 für das Kältemittel ist ein Verdampfungsdruckregler 36 angeordnet, dem ein Bypaßventil 37 parallelgeschaltet ist. Im Strömungsweg folgend ist ein Kompressor 31 angeordnet, von dem erwärmtes, komprimiertes Kühlmittel zum Wärmetauscher 7' gelangt, dem ein Bypaß 33 parallelgeschaltet ist. Im folgenden passiert die Leitung 32 ein Rückschlagventil 34 und den mit dem Kondensator 25 des Kühlaggregates in Wärmekontakt stehenden Wärmetauscher 7, der von einem Kondensatorgebläse 25' mit Umgebungsluft beaufschlagt ist. Über einen Trockner 35 und einen Vorwärmetauscher 38 wird das Kühlmittel über ein Expansionsventil 30 dem Verdampfer 39 zugeführt und im Kreislauf weitergeführt.

Die Anordnung einer Bypaßleitung 33' für den Wärmetauscher 7' ist deshalb erforderlich, da bei Stillstehen des Kompressors 31 der über die Leitung 4 in den Kühlraum 40 eingespeiste Stickstoff eine Erstarrung des Kältemittels in der Leitung 32 bzw. deren Verstopfen bewirken könnte und bei Einsetzen der Arbeit des Kompressors 31 die Leitung 32 bzw. andere Bauteile auf Grund des Überdruckes beschädigt werden können. Demzufolge ist im Bypaß 33' das Überdruckventil 33 angeordnet, das bei einem bestimmten Druck in der Leitung 32 öffnet. Sobald der Kompressor zu arbeiten beginnt, erwärmt das vom Kompressor komprimierte Kältemittel das erstarrte Kältemittel im Wärmetauscher 7', worauf der Durchfluß durch den Wärmetauscher 7 wieder frei wird, worauf das Bypaßventil 33 schließt und die gesamte Kältemittelmenge durch den Wärmetauscher 7' strömt. Entsprechend ist vorgesehen, daß die Bypaßleitung 33' nahe genug am Wärmetauscher 7' vorbeigeführt ist, so daß einerseits diese Leitung nicht einfrieren kann und anderseits von dieser Leitung der Wärmetauscher 7' aufgetaut werden kann.

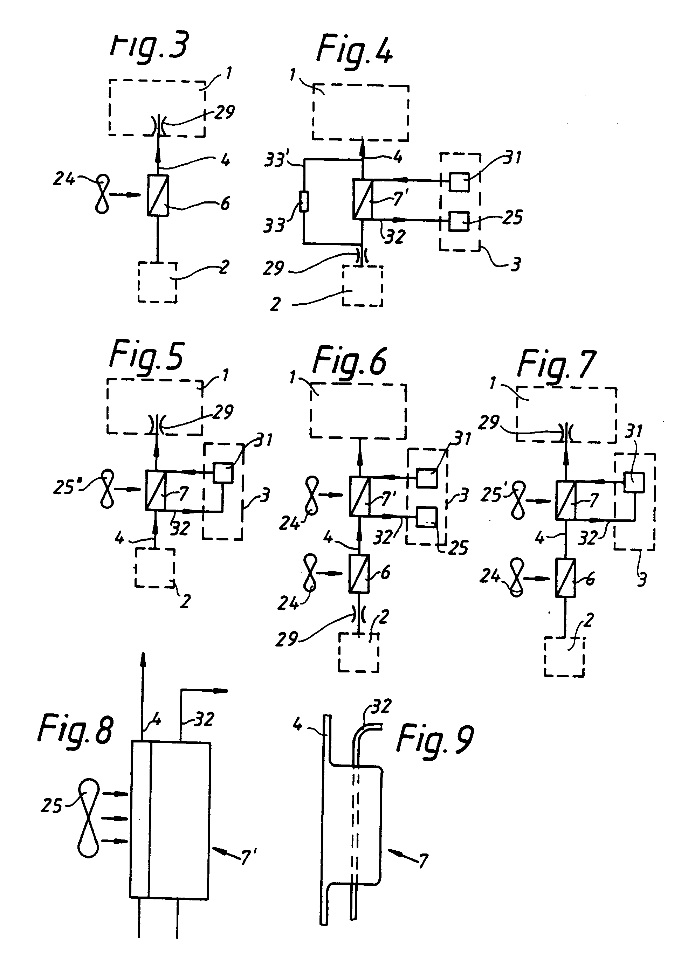

Fig.3 zeigt schematisch eine Einrichtung zur Erwärmung des Stickstoffes, bei der Stickstoff aus dem Stickstoffbehälter 2 in den Kühlraum des Kühlcontainers 1 geleitet wird. Die Leitung 4 ist über einen Warmetauscher 6 für Wärmekontakt mit der Umgebungsluft geführt, der mit einem Gebläse 24 beaufschlagt werden kann.

Fig.4 zeigt eine Einrichtung mit einem Wärmetauscher 7', in dem ein Wärmetausch zwischen dem vom Kälteaggregat 3 bzw. vom Kompressor 31 über die Leitung 32 zum Kondensator 25 geführten Kältemittel und dem in der Leitung 4 geführten Stickstoff stattfindet. Dem Wärmetauscher 7' ist eine Bypaßleitung 33' mit einem Bypaßventil 33 zugeordnet.

Fig.5 zeigt eine Einrichtung, bei der in der Stickstoffleitung 4 ein Wärmetauscher 7 angeordnet ist, welcher mit dem Kondensator 25 des Kälteaggregates 3 zu einer Baueinheit zusammengefügt ist und mit einem Gebläse, insbesondere dem Kondensatorgebläse 25'', mit Umgebungsluft beaufschlagt ist.

Fig.6 zeigt eine Einrichtung, bei der in der Stickstoffleitung 4 ein Wärmetauscher für Außenluftkontakt 6 angeordnet ist, der gegebenenfalls mit einem Gebläse 24 mit Außenluft beaufschlagt ist. Ferner ist in der Leitung 4 ein Wärmetauscher 7' angeordnet, der im Kältemittelkreislauf zwischen dem Kompressor 31 und dem Kondensator 25 gelegen ist und gegebenenfalls von einem Gebläse 24 mit Umgebungsluft beaufschlagt wird, um den Stickstoff in der Leitung 4 zu erwärmen.

Fig.7 zeigt eine Anordnung, bei der in der Leitung 4 ein von einem Gebläse 24 beaufschlagter Wärmeaustauscher 6 angeordnet ist zum Wärmeaustausch mit Außenluft und in der ferner eine Baueinheit 7 aus einem Wärmetauscher und dem Kondensator 25 angeordnet ist, welche von einem Gebläse 25', insbesondere dem Kondensatorgebläse, beaufschlagt ist.

Fig.8 zeigt eine Anordnung, bei der Wärmetauscher, insbesondere in Form von Lamellenrohren bzw. Rosten oder Platten zu einer Anordnung 7' zusammengefügt sind, die mit einem Gebläse 25' mit Luft durchströmt wird. Alternativ dazu könnte gemäß Fig.9 auch eine Anordnung vorgesehen sein, in der die Kältemittelleitung 32 durch einen Behälter durchgeführt ist, welcher mit Stickstoff aus der Stickstoffleitung 4 durchströmt wird.

Erfindungsgemäß können auch andere Einrichtungen zur Erwärmung des Stickstoffes in der Leitung 4 eingesetzt werden. Wärmetauscher zum Wärmekontakt mit der Außenluft können ebenso wie die Wärmetauscher zum Austausch der Wärme mit dem in der Leitung 32 zirkulierten Kältemittel beliebige Form aufweisen. Ebenso bleibt die Formgebung bzw. der Aufbau der Baueinheit, welche eine Kombination des Wärmetauschers für den Stickstoff mit dem Kondensator 25 des Kältemittelaggregates 3 darstellt, dem Fachmann überlassen. Man wird derartige Wärmetauscher selbstverständlich nach den Gesichtspunkten eines möglichst guten Wärmetausches auslegen.

Bei der vorliegenden Erfindung wird nicht die Kälteenergie des mitgeführten Stickstoffs zur Kühlung ausgenützt, sondern es wird flüssiger Stickstoff eingesetzt, um eine möglichst große Quantität an Stickstoff mitführen zu können. Durch Einregelung der Stickstofftemperatur bzw. Erwärmen des Stickstoffes auf einen Wert, der die Temperatur im Kühlraum 40 um ein Geringes unterschreitet, wird in gewisser Weise auch der Kühleffekt des Stickstoffs bzw. dessen Kälteenergie ausgenutzt, ohne die im Kühlraum 40 gelagerte Ware zu beeinträchtigen Der Durchsatz des Stickstoffes bzw. des Kältemittels durch die Wärmetauscher und/oder die Leistung der Gebläse 24,25', die Leistung des Kälteaggregates, das Öffnen und Schließen der Einspeiseventile usw. erfolgt unter der Regelung der Steuereinheit 13. Z.B. kann durch das Ventil bzw. die Drossel 29, welche(s) den Durchfluß des Stickstoffs hemmt bzw. steuert, eine Temperaturregelung des eingespeisten Stickstoffes erfolgen, indem er die Wärmetauscher rascher oder langsamer durchquert. Die Drossel 29 regelt den Stickstoffdruck in der Leitung 4 bzw. den Verbrauch und wird durch den Rechner 13 gesteuert. Ebenfalls kann durch Einregelung der Geschwindigkeiten der Gebläse 24 und 25' eine Temperaturanpassung des Stickstoffes an die Temperatur im Kühlraum erreicht werden. Vorteilhafterweise werden die Gebläse 24 und 25' so laufen gelassen, daß bei kombinierten Einheiten von Wärmetauscher und Kondensator oder Wärmetauscher und Kältemittelleitung 32 ein Stocken bzw. Festwerden des Kältemittels 32 vermieden wird.

Bei der Einspeisung des Stickstoffes über die Leitung 28 können in dieser Leitung die gleichen Vorkehrungen bezüglich Wärmetauscher getroffen werden, wie sie in der Leitung 4 vorgesehen sind. Die Leitung 28 kann ebenso wie die Leitung 4 über externe bzw. dem Kondensator 25 zugeordnete bzw. in der Kältemittelleitung 32 angeordnete Wärmetauscher geführt werden.

Es wurde in der Praxis festgestellt, daß durch die aus den Behältern 2 verdampfende Stickstoffmenge, welche erfindungsgemäß zur Einstellung der Atmosphäre verwendet wurde bzw. in den Kühlraum 40 eingeleitet wurde, die aber auch in den Raum 41 und von dort in den Kühlraum eingeleitet werden kann, die durch Leckage des Behälters 1 entstehenden Stickstoffverluste weitgehend ausgeglichen werden konnten.

Bei der Erstbefüllung wird derart vorgegangen, daß der Container mit normaler Atmosphäre gefüllt vorgekühlt wird, daß sodann die Waren eingelagert werden und daß daraufhin ein Begasen mit Stickstoff bzw. das Einstellen der Containeratmosphäre und ein Abkühlen vorgenommen wird, welcher Vorgang etwa 6 Stunden dauert.

Der Rechner 13 bzw. die Sensorbox 16 messen u.a. den Gehalt an Stickstoff, CO₂, Argon, Äthylen usw. im Kühlraum. Mit 46 sind Sensoren für O₂, CO₂, die Raumfeuchte R_{T} usw. bezeichnet, die im Kühlraum 40 bzw. im Geräteraum 41 im Strömungsweg, insbesondere stromauf vom Verdampfer bzw. vom Verdampfergebläse 44 bzw. vorteilhaft vor dem Austritt der Rückluft gelegen sein können.

Die Einstellung der Zusammensetzung der Atmosphäre des erfindungsgemäßen Kühlbehälters erfolgt vorzugsweise derart, daß der N₂-Gehalt der Atmosphäre mit dem mitgeführten N₂ eingeregelt wird, wobei überschüssiger Sauerstoff vorzugsweise mit N₂ ausgespült wird. Der CO₂-Gehalt wird vorzugsweise mit Hilfe eines CO₂-Scrubbes bzw. Molekularsiebes 48 bzw. durch Zufuhr von CO₂ aus dem mitgeführten Behälter 2' eingestellt. Ein zu geringer O₂-Gehalt wird durch Zufuhr von Außenluft mit einer Zufuhreinrichtung 47, einer Pumpe, ausgeglichen. Weitere einzuregelnde Atmosphärenbestandteile (Äthylen, Argon) können durch Spülung mit N₂ oder durch Zufuhr aus eigenen Behältern eingeregelt werden. Sämtliche Einstell- und Regelungsvorgänge werden von der Steuereinrichtung vorgenommen.

Micht in der Zeichnung dargestellt ist eine Steuereinheit für die gegebenenfalls vorgesehene Einregelung der Erwärmungseinrichtungen für den Stickstoff. Erfindungsgemäß ist vorgesehen, daß in der Bypaßleitung ein bei einem vorgegebenen Druck in der Kältemittelleitung öffnendes Ventil vorgesehen ist. Es kann ferner vorgesehen sein, daß die Steuereinheit die Luftzufuhr zu den Wärmetauschern z.B. mittels verstellbaren Luftjalousien, Drehzahlsteuereinrichtungen für die Gebläse od.dgl., regelt. Mit der Steuereinheit kann das Ausmaß der Erwärmung des N₂ an die Kühlparameter bzw. die Kühlverhältnisse angepaßt werden und die Menge und/oder der Druck des einzuspeisenden N₂ eingeregelt werden.

## Patentansprüche

1. Kühlbehälter, insbesondere Kühlcontainer zum Transport bzw. Lagerung von Waren, in den insbesondere zur Aufrechterhaltung der Atmosphärenzusammensetzung Stickstoff eingespeist wird, der in flüssiger Form in Behältern mit dem Kühlbehälter mitgeführt wird, wobei zur Kühlung der Atmosphäre des Kühlbehälters (1) zumindest ein Kühlaggregat vorgesehen ist, dadurch gekennzeichnet, daß die Atmosphäre über das Kühlaggregat (3) während von einer Steuereinrichtung (13) vorgegebener Zeitabschnitte mit zumindest einem Gebläse (44) umgewälzt wird und zumindest eine Einrichtung (6,7,7') zur Erwärmung des Stickstoffs vor seiner Einspeisung in den Kühlraum (4) des Kühlbehälters (1) vorgesehen ist, mit der der Stickstoff auf eine Temperatur erwärmbar ist, die im wesentlichen der im Kühlraum (40) herrschenden Temperatur entspricht, vorzugsweise nur etwas geringer, insbesondere um bis zu 5% geringer als diese ist.

2. Behälter nach Anspruch 1, dadurch gekennzeichnet, daß die Einrichtung zur Erwärmung des Stickstoffs von zumindest einem außerhalb des Kühlraumes (40) gelegenen, in der Stickstoffleitung (4) vom Stickstoffbehälter (2) zum Kühlraum (40) angeordneten Wärmetauscher (6,7,7') gebildet ist.

3. Behälter nach Anspruch 1 oder 2, dadurch gekennzeichnet, daß die Einrichtung zur Erwärmung des Stickstoffs zumindest einen außerhalb des Kühlraumes (40) angeordneten Wärmetauscher (6) umfaßt, der in Wärmekontakt mit der Umgebungsluft steht bzw. von dieser umströmt ist und/oder zumindest einen Wärmetauscher (7') umfaßt, der in der Kältemittelleitung (32) zwischen dem Kompressor (31) und dem Kondensator (25) des Kühlaggregates (3) angeordnet ist und/oder einen Wärmetauscher (7) umfaßt, der in der Kältemittelleitung (32) gelegen ist und mit dem Kondensator (25) in Wärmekontakt steht.

4. Behälter nach einem der Ansprüche 1 bis 3, dadurch gekennzeichnet, daß der Wärmetauscher (6) für den Wärmetausch mit der Umgebungsluft dem Wärmetauscher (7,7') für den Wärmeaustausch mit dem Kältemittel in der Kältemittelleitung (32) vorgeschaltet ist.

5. Behälter nach einem der Ansprüche 1 bis 4, dadurch gekennzeichnet, daß der Abschnitt der Kältemittelleitung (32), der in Wärmeübertragungskontakt mit der Leitung (4) für den Stickstoff steht bzw. der vom Kältemittel und dem zu erwärmenden Stickstoff durchströmte Wärmetauscher (7') von einer Bypaßleitung (33') überbrückt ist.

6. Behälter nach Anspruch 5, dadurch gekennzeichnet, daß in der Bypaßleitung (33') ein bei einem vorgegebenen Druck in der Kältemittelleitung (32) öffnendes Ventil (33) vorgesehen ist.

7. Behälter nach einem der Ansprüche 1 bis 6, dadurch gekennzeichnet, daß die Einrichtung (6,7,7') zur Erwärmung des Stickstoffs eine vom Stickstoff durchströmte Austauschereinheit, z.B. ein Lamellenrohr, umfaßt, die in Wärmekontakt mit einer vom Kühlmittel zwischen Kompressor (31) und Kondensator (25) des Kühlaggregates (3) durchströmten Austauschereinheit, z.B. ein Lamellenrohr, steht bzw. mit dieser zu einer Baueinheit zusammengefaßt ist.

8. Behälter nach einem der Ansprüche 1 bis 7, dadurch gekennzeichnet, daß der Kondensator (25) für das Kältemittel mit einem Wärmetauscher in der Stickstoffleitung (4) zu einer Einheit (7') zusammengefaßt ist.

9. Behälter nach einem der Ansprüche 1 bis 8, dadurch gekennzeichnet, daß die Wärmetauscher (6,7,7') bzw. die in Wärmekontakt stehenden Einheiten von Gebläsen (24,25') bzw. von dem Kondensatorgebläse (25'') mit Umgebungsluft beaufschlagt bzw. umströmt werden.

10. Behälter nach einem der Ansprüche 1 bis 9, dadurch gekennzeichnet, daß in der Einspeiseleitung (4) für den erwärmten Stickstoff in das Innere des Kühlraumes (40) zumindest eine, gegebenenfalls regelbare, Drosseleinrichtung (29), z.B. eine Düse, ein regulierbares Ventil od. dgl., vorzugsweise im Endbereich der Leitung (4) und/oder vor den Einrichtungen (6,7,7') zur Erwärmung des Stickstoffs vorgesehen ist.

11. Behälter nach einem der Ansprüche 1 bis 10, dadurch gekennzeichnet, daß der Stickstoffbehälter (2) eine Lüftungsleitung bzw. eine Ausblaseleitung (28) aufweist, die in das Innere des Kühlraumes (40) geführt ist.

12. Behälter nach Anspruch 11, dadurch gekennzeichnet, daß in der, gegebenenfalls ein Sicherheitsventil (17') enthaltenden, Ausblaseleitung (28), insbesondere dem Sicherheitsventil (17') nachgeordnet, ein Dreiwegeventil (17) angeordnet ist, mit dem diese an die Umgebung öffenbar ist.

13. Behälter nach Anspruch 11 oder 12, dadurch gekennzeichnet, daß im Kühlraum (40) ein auf einen bestimmten Druck einregelbares Überdruckventil (43) angeordnet ist.

14. Behälter nach einem der Ansprüche 1 bis 13, dadurch gekennzeichnet, daß in der von dem Stickstoffbehälter (2) in den Kühlraum (40) führende Leitung (28) zumindest eine Heizeinrichtung für den Stickstoff angeordnet ist oder daß in dieser Leitung (28) ein Wärmetauscher zum Wärmekontakt mit der Umgebungsluft angeordnet ist und/oder daß in dieser Leitung (28) ein Wärmetauscher zum Wärmeaustausch mit dem Kältemittel des Kühlaggregates (3) zwischen dem Kompressor (31) und dem Kondensator (25) angeordnet ist.

15. Behälter nach einem der Ansprüche 1 bis 14, dadurch gekennzeichnet, daß das Gebläse (44) für die im Inneren des Behälters (1) erfolgende Umwälzung der Atmosphäre ein im Normalfall abgeschaltetes Gebläse ist, das von der Steuereinrichtung (13) in willkürlich bestimmten oder von bestimmten Parameterwerten im bzw. außerhalb des Behälters (1), insbesondere der Temperatur und/oder der Feuchtigkeit (relativen Luftfeuchte), abhängigen Zeitabständen für eine vorbestimmte oder von den Parameterwerten abhängige Laufzeitdauer einschaltbar ist.

16. Behälter nach einem der Ansprüche 1 bis 15, dadurch gekennzeichnet, daß die Einrichtung(en) (6,7,7') zur Erwärmung des Stickstoffes von einer Steuereinheit, gegebenenfalls der Steuereinrichtung (13), im Hinblick auf die Einstellung der Temperatur und/oder die durchgelassene Menge des zu erwärmenden einzuspeisenden Stickstoffes, gesteuert ist (sind).

17. Behälter nach Anspruch 16, dadurch gekennzeichnet, daß die Steuereinheit verstellbare Jalousien für den Ventilatorluftstrom, und/oder Regeleinrichtungen, z.B. Drosseln, für den einzuspeisenden N₂ steuert.

18. Behälter nach einem der Ansprüche 1 bis 17, dadurch gekennzeichnet, daß die Steuereinrichtung die Luftzufuhr zu den Wärmetauschern (6,7,7'), z.B. mittels verstellbarer Luftjalousien, Drehzahlsteuereinrichtungen für die Gebläse (24,25',25'') od.dgl., regelt.

19. Behälter nach einem der Ansprüche 10 bis 18, dadurch gekennzeichnet, daß die Steuereinrichtung die Drosseleinrichtung (29) regelt.

20. Kühlverfahren für Kühlbehälter, insbesondere Kühlcontainer zum Transport bzw. Lagerung von Waren, in die insbesondere zur Aufrechterhaltung der Atmosphärenzusammensetzung Stickstoff eingespeist wird, der in flüssiger Form in Behältern mit den Kühlbehältern mitgeführt wird, wobei die Atmosphäre der Kühlbehälter (1) mit zumindest einem Kühlaggregat gekühlt wird, dadurch gekennzeichnet, daß die Atmosphäre während vorgegebener Zeitabschnitte zur Kühlung umgewälzt wird und der Stickstoff vor seiner Einspeisung in den Kühlraum (40) des Kühlbehälters (1) auf eine Temperatur erwärmt wird, die im wesentlichen der im Kühlraum (40) herrschenden Temperatur entspricht, vorzugsweise nur etwas geringer insbesondere um bis zu 5% geringer als diese ist.

21. Verfahren nach Anspruch 20, dadurch gekennzeichnet, daß der Stickstoff auf seinem Weg vom Stickstoffbehälter (2) zum Kühlraum (40) erwärmt wird.

22. Verfahren nach Anspruch 20 oder 21, dadurch gekennzeichnet, daß der Stickstoff durch Wärmekontakt mit der Umgebungsluft und/oder mit der über den Kompressor (31) und/oder den Kondensator (25) des Kühlaggregates (3) geführten Luft erwärmt wird.

23. Verfahren nach einem der Ansprüche 20 bis 22, dadurch gekennzeichnet, daß der Druck des in den Kühlraum (40) eingespeisten Stickstoffes an den Innendruck im Kühlraum (40) angepaßt wird.

## Claims

1. Refrigerated container, in particular refrigerated container for the transportation, respectively, storage of goods, into which, particularly in order to maintain the composition of the atmosphere, nitrogen is delivered, which is carried in liquid form in containers with the refrigerated container, wherein at least one cooling system is provided for cooling the atmosphere of the refrigerated container (1), characterized in that the atmosphere is circulated by means of at least one blower (44) via the cooling system (3) during periods of time determined by a control means (13) and that at least one means (6,7,7') for warming the nitrogen before its introduction into the cool room (4) of the refrigerated container (1) is provided by which the nitrogen can be heated to a temperature that substantially corresponds to the temperature in the cool room (40), preferably is only somewhat lower than that, in particular up to 5 % lower.

2. Container according to claim 1, characterized in that the means for warming the nitrogen is formed by at least one heat exchanger (6,7,7') located outside the cool room (40) and disposed in the nitrogen line (4) leading from the nitrogen container (2) to the cool room (40).

3. Container according to claim 1 or 2, charaterized in that the means for warming the nitrogen comprises at least one heat exchanger (6) disposed outside the cool room (40) and being in thermal contact with the ambient air, respectively, is disposed in the stream of this air and/or comprises at least one heat exchanger (7') disposed in the cooling-agent line (32) between the compressor (31) and the condenser (25) of the cooling system (3) and/or comprises a heat exchanger (7) arranged in the cooling agent line (32) and being in thermal contact with the condenser (25).

4. Container according to any of the claims 1 to 3, characterized in that the heat exchanger (6) for the thermal exchange with the ambient air precedes the heat exchanger (7,7') for the thermal exchange with the cooling agent in the cooling-agent line (32).

5. Container according to any of the claims 1 to 4, characterized in that the section of the cooling-agent line (32) being in thermal transfer contact with the line (4) for the nitrogen, respectively, the heat exchanger through which the cooling-agent and the nitrogen to be heated pass, is bridged by by-pass line (33').

6. Container according to claim 5, characterized in that a valve (33) is provided in the by-pass line (33') which opens at a pre-set pressure in the cooling agent line (32).

7. Container according to any of claims 1 to 6, characterized in that the means (6,7,7') for warming the nitrogen comprises an exchanger unit, for example a gilled tube through which the nitrogen streams, which unit is in thermal contact with an exchanger unit, for example a gilled tube, respectively is combined therewith to a structural unit, through which latter exchanger unit the cooling-agent flows between compressor (31) and condenser (25) of the cooling system (3).

8. Container according to any of the claims 1 to 7, characterized in that the condenser (25) for the cooling agent is combined with a heat exchanger in the nitrogen line (4) to form a unit (7').

9. Container according to any of claims 1 to 8, characterized in that the heat exchangers (6,7,7'), respectively, the units that are in thermal contact, are acted upon with ambient air, respectively, are disposed in the stream of this air, by blowers (24,25'), respectively, by the condenser blower (25'').

10. Container according to any of claims 1 to 9, characterized in that in the line (4) for supplying the warmed nitrogen into the interior of the cool room (40) there is provided at least one, if desired controllable, choke means (29) for example a nozzle, a regulatable valve or the like, preferably in the end section of the line (4) and/or upstream the means (6,7,7') for warming the nitrogen.

11. Container according to any of the claims 1 to 10, characterized in that the nitrogen container (2) comprises a vent line, respectively, a blow-off line (28) that passes into the interior of the cool room (40).

12. Container according to claim 11, characterized in that in the blow-off line (28) which, if desired, is provided with a safety valve (17'), a three-way valve (17), in particular downstream the safety valve (17'), is provided, by means of which this line can be opened to the environment.

13. Container according to claim 11 or 12, characterized in that in the cool room (40) an over-pressure valve (43) adjustable to a specific pressure is provided.

14. Container according to any of claims 1 to 13, characterized in that in the line (28) passing from the nitrogen container (2) into the cool room (40) at least one heating means for the nitrogen is provided, or that in this line (28) a heat exchanger for heat exchange with the ambient air is disposed and/or that in this line (28) a heat exchanger for heat exchange with the cooling-agent of the cooling system (3) is provided between the compressor (31) and the condenser (25).

15. Container according to any of claims 1 to 14, characterized in that the blower (44) for the circulation of the atmosphere within the interior of the container (1) is a blower which is normally switched off, which blower can be switched on by the control means (13) at arbitrarily determined time intervals or at time intervals determined by specific parameter values inside, respectively, outside the container (1), in particular of the temperature and/or the humidity (relative air humidity) for a predetermined period of function or for a period of function dependent from the parameter values.

16. Container according to any of the claims 1 to 15, characterized in that the means (6,7,7') for warming the nitrogen are controlled from a control unit, if desired from the control means (13), in order to adjust the temperature and/or the passed quantity of the nitrogen to be heated and supplied.

17. Container according to claim 16, characterized in that the control means regulates adjustable louvers for the blower air stream and/or regulating means, for example chokes, for the N₂ to be supplied.

18. Container according to any of the claims 1 to 17, characterized in that the control unit regulates the supply of air to the heat exchangers (6,7,7'), for example by means of adjustable air louvers, speed control means for the blowers (24,25',25'') or the like.

19. Container according to any of the claims 1 to 18, characterized in that the control unit regulates the choke means (29).

20. Cooling process for refrigerated containers, in particular refrigerated containers for transportation, respectively, storage of goods, into which, in particular for maintaining the atmospheric composition, nitrogen is introduced which is carried along with the refrigerated containers in liquid form in containers, the atmosphere of the refrigerated containers (1) being cooled by means of at least one cooling system, characterized in that the atmosphere is circulated for given periods of time in order to be cooled and the nitrogen is heated before its introduction into the cool room (40) of the refrigerated container (1) to a temperature substantially corresponding to the temperature within the cool room (40), preferably to a temperature which is only slightly lower than this temperature, in particular up to 5 % lower.

21. Process according to claim 20, characterized in that the nitrogen is heated on its path from the nitrogen container (2) to the cool room (40).

22. Process according to claim 20 or 21, characterized in that the nitrogen is warmed by thermal contact with the ambient air and/or with the air that is passed via the compressor (31) and/or the condenser (25) of the cooling system (3).

23. Process according to any of claims 20 to 22, characterized in that the pressure of the nitrogen supplied into the cool room (40) is matched to the interior pressure within the cool room (40).

## Revendications

1. Récipient frigorifique, en particulier container frigorifique pour le transport ou le stockage de marchandises à l'intérieur duquel on introduit de l'azote pour le maintien de la composition de l'atmosphère en particulier, l'azote étant transporté sous forme liquide dans des récipients accompagnant le récipient frigorifique, où au moins un groupe frigorifique est prévu pour le refroidissement de l'atmosphère du récipient frigorifique (1), caractérisé en ce que l'atmosphère est mise en circulation en passant par le groupe frigorifique (3) à l'aide d'au moins un ventilateur (44) pendant des laps de temps déterminés par un dispositif de commande (13) et qu'au moins un dispositif (6, 7, 7') est prévu pour le réchauffement de l'azote avant son introduction dans la chambre frigorifique (40) du récipient frigorifique (1), ce dispositif permettant de réchauffer l'azote à une température qui correspond sensiblement à la température qui règne à l'intérieur de la chambre frigorifique (40) en étant de préférence très légèrement inférieure, en particulier jusqu'à 5 % inférieure à cette dernière.

2. Récipient selon la revendication 1, caractérisé en ce que le dispositif de réchauffement de l'azote est constitué par au moins un échangeur de chaleur (6, 7, 7') situé à l'extérieur de la chambre frigorifique (40) et disposé dans la conduite d'azote (4) qui mène du récipient d'azote (2) vers la chambre frigorifique (40).

3. Récipient selon la revendication 1 ou 2, caractérisé en ce que le dispositif de réchauffement de l'azote comporte au moins un échangeur de chaleur (6) disposé à l'extérieur de la chambre frigorifique (40) et qui est en contact thermique avec l'air ambiant ou, selon le cas, soumis à un courant d'air ambiant et/ou comporte au moins un échangeur de chaleur (7') qui est disposé dans la conduite de fluide frigorigène (32) entre le compresseur (31) et le condenseur (25) du groupe frigorifique (3) et/ou comporte un échangeur de chaleur (7) qui est situé dans la conduite de fluide frigorigène (32) et est en contact thermique avec le condenseur (25).

4. Récipient selon l'une quelconque des revendications 1 à 3, caractérisé en ce que l'échangeur de chaleur (6) destiné à l'échange thermique avec l'air ambiant est monté en amont de l'échangeur de chaleur (7, 7') destiné à l'échange thermique avec le fluide frigorigène dans la conduite de fluide frigorigène (32).

5. Récipient selon l'une quelconque des revendications 1 à 4, caractérisé en ce que le tronçon de conduite de fluide frigorigène (32) qui est en contact d'échange thermique avec la conduite (4) destiné à l'azote, ou, selon le cas, l'échangeur de chaleur (7') traversé par le fluide frigorigène et l'azote à réchauffer est ponté par une conduite de dérivation (33').

6. Récipient selon la revendication 5, caractérisé en ce que dans la conduite de dérivation (33') est prévue une soupape (33) qui s'ouvre lorsque la pression dans la conduite de fluide frigorigène (32) atteint une valeur prédéterminée.

7. Récipient selon l'une quelconque des revendications 1 à 6, caractérisé en ce que le dispositif (6, 7, 7') de réchauffement de l'azote comporte un ensemble échangeur, un tube à ailettes p.ex., traversé par l'azote et qui est en contact thermique ou, selon le cas, regroupé en un ensemble de construction avec un ensemble échangeur, un tube à ailettes p.ex., traversé par le fluide frigorigène entre le compresseur (31) et le condenseur (25) du groupe frigorifique (3).

8. Récipient selon l'une quelconque des revendications 1 à 7, caractérisé en ce que le condenseur (25) destiné au fluide frigorigène est regroupé en un ensemble (7') avec un échangeur de chaleur dans la conduite d'azote (4).

9. Récipient selon l'une quelconque des revendications 1 à 8, caractérisé en ce que les échangeurs de chaleur (6, 7, 7') ou, selon le cas, les ensembles en contact thermique sont alimentés en air ambiant ou, selon le cas, soumis à un courant d'air ambiant à l'aide de ventilateurs (24, 25') respectivement du ventilateur (25'') du condenseur.

10. Récipient selon l'une quelconque des revendications 1 à 9, caractérisé en ce que dans la conduite d'introduction (4) de l'azote réchauffé à l'intérieur de la chambre frigorifique (40) est prévu au moins un dispositif d'étranglement (29), réglable le cas échéant, p.ex. une buse, une soupape réglable ou organe similaire, de préférence de la partie d'extrémité de la conduite (4) et/ou en amont des dispositifs (6, 7, 7') de réchauffement de l'azote.

11. Récipient selon l'une quelconque des revendications 1 à 10, caractérisé en ce que le récipient d'azote (2) présente une conduite d'aération ou, selon le cas, une conduite de décharge (28) menant à l'intérieur de la chambre frigorifique (40).

12. Récipient selon la revendication 11, caractérisé en ce que dans la conduite de décharge (28) qui renferme le cas échéant une soupape de sûreté (17') est disposé de préférence en aval de la soupape de sûreté (17') une distributeur trois voies (17) permettant l'ouverture de la conduite de décharge vers l'environnement ambiant.

13. Récipient selon la revendication 11 ou 12, caractérisé en ce que dans la chambre frigorifique (40) est disposé une soupape de surpression (43) ajustable à une pression donnée.

14. Récipient selon l'une quelconque des revendications 1 à 13, caractérisé en ce que dans la conduite (28) menant du récipient d'azote (2) dans la chambre frigorifique (40) est disposé au moins un dispositif de réchauffage de l'azote, ou que dans cette conduite (28) est disposé un échangeur de chaleur destiné au contact thermique avec l'air ambiant, et/ou que dans cette conduite (28) est disposé un échangeur de chaleur pour l'échange de chaleur avec le fluide frigorigène du groupe frigorifique (3) entre le compresseur (31) et le condenseur (25).

15. Récipient selon l'une quelconque des revendications 1 à 14, caractérisé en ce que le ventilateur (44) pour la circulation de l'atmosphère effectuée à l'intérieur du récipient (1) est un ventilateur normalement à l'arrêt et capable d'être mis en marche par le dispositif de commande (13) selon des intervalles de temps qui sont déterminés arbitrairement ou en fonction de la valeur de certains paramètres à l'intérieur ou, selon le cas, à l'extérieur du récipient (1) tels que la température et/ou l'humidité (humidité relative), et pour une durée de marche prédéterminée ou dépendant de la valeur des paramètres.

16. Récipient selon l'une quelconque des revendications 1 à 15, caractérisé en ce que le(s) dispositif(s) (6, 7, 7') de réchauffement de l'azote est (sont) commandé(s) par une unité de commande, le cas échéant par le dispositif de commande (13) en vue de régler la température et/ou le débit autorisé de l'azote à introduire qui doit être réchauffé.

17. Récipient selon la revendication 16, caractérisé en ce que l'unité de commande commande des volets à persienne réglables pour le débit d'air du ventilateur, et/ou des dispositifs de réglage, étrangleurs, p.ex., pour l'azote N₂ à introduire.

18. Récipient selon l'une quelconque des revendications 1 à 17, caractérisé en ce que le dispositif de commande règle l'alimentation d'air vers les échangeurs de chaleur (6, 7, 7') p.ex. au moyen de volets d'air à persienne, dispositifs de commande de la vitesse de rotation pour les ventilateurs (24, 25', 25'') ou moyens similaires.

19. Récipient selon l'une quelconque des revendications 10 à 18, caractérisé en ce que le dispositif de commande règle le dispositif d'étranglement (29).

20. Procédé de refroidissement pour récipients frigorifiques, en particulier containers frigorifiques pour le transport ou le stockage de marchandises à l'intérieur desquels on introduit de l'azote pour le maintien de la composition de l'atmosphère en particulier, l'azote étant transporté sous forme liquide dans des récipients accompagnant les récipients frigorifiques, ou l'atmosphère des récipients frigorifiques (1) est refroidi par au moins un groupe frigorifique, caractérisé en ce que l'atmosphère est mise en circulation pendant des laps de temps déterminés en vue de son refroidissement, et que l'azote est réchauffé avant son introduction dans la chambre frigorifique (40) du récipient frigorifique (1) à une température qui correspond sensiblement à la température qui règne à l'intérieur de la chambre frigorifique (40) en étant de préférence très légèrement inférieure, en particulier jusqu'à 5 % inférieure à cette dernière.

21. Procédé selon la revendication 20, caractérisé en ce que l'azote est réchauffé pendant son trajet du récipient d'azote (2) vers la chambre frigorifique (40).

22. Procédé selon la revendication 20 ou 21, caractérisé en ce que l'azote est réchauffé par contact thermique avec l'air ambiant et/ou moyennant l'air qui est alimenté à travers le compresseur (31) et/ou le condenseur (25) du groupe frigorifique (3).

23. Procédé selon l'une quelconque des revendications 20 à 22, caractérisé en ce que l'on adapte la pression de l'azote introduite dans la chambre frigorifique (40) à la pression intérieure dans la chambre frigorifique (40).
